# NEUE EUROPÄISCHE PATENTSCHRIFT

(11) **EP 1 759 141 B2**
(45) Veröffentlichungstag und Bekanntmachung des Hinweises auf die Entscheidung über den Einspruch: **09.04.2014**
(45) Hinweis auf die Patenterteilung: 27.04.2011
(21) Anmeldenummer: 05755972.6
(22) Anmeldetag: 24.06.2005
(51) Int. Cl.: F16L 13/14

(54) **FITTING**
FITTING
RACCORD

(30) Priorität: 25.06.2004 DE 102004031045
(43) Veröffentlichungstag der Anmeldung: 07.03.2007
(73) Patentinhaber: Yorkshire Fittings Ltd, Leeds, West Yorkshire LS10 1NA (GB)
(72) Erfinder: HENKE, Stefan, 57462 Olpe (DE)
(74) Vertreter: Henseler, Daniela
(86) Internationale Anmeldenummer: PCT/EP2005/006842
(87) Internationale Veröffentlichungsnummer: WO 2006/000430

(56) Entgegenhaltungen:
- EP-A1- 1 486 713
- DE-A1- 10 236 848
- DE-A1- 19 844 878
- US-A- 5 484 174

## Beschreibung

Die Erfindung betrifft ein Fitting zur Pressverbindung von Rohrenden nach dem Oberbegriff des Anspruchs 1.

Fittinge der eingangs genannten Art sind an sich bekannt. Solche Fittinge umfassen einen Anschlussstutzen, an dem zur Aufnahme eines Dichtelementes eine radial nach außen im Querschnitt wulstartig ausgeformte Erhebung angebracht ist. Die Erhebung dient zur Aufnahme eines Rohrendes. Zur Erstellung einer Pressverbindung wird der Anschlussstutzen mit dem Rohr mittels eines Presswerkzeuges kalt verformt. Bei der Verpressung werden sowohl die wulstförmige Erhebung mit innen liegendem Dichtelement als auch die beidseitig dieser Erhebung angrenzenden Bereiche nahezu gleichzeitig verformt, sodass eine unlösbare, dauerhaft dichte Verbindung entsteht.

Im Anschluss an die Installation eines Rohrleitungssystems wird dieses vorschriftsmäßig unter Druck gesetzt. Wurde eine Verbindungsstelle versehentlich nicht verpresst, führt diese Druckprobe normalerweise zu einer feststellbaren Leckage. Im Falle ungünstiger Tolleranzpaarungen von Fitting, Dichtelement und Rohr kann es aber vorkommen, dass das Dichtelement beim Einführen des Rohres in den Anschlussstutzen derart zwischen Fitting und Rohr gepresst wird, dass keine ersichtliche Leckage auftritt. Erst im späteren Betrieb wird die nicht verpresste Verbindung auf Grund von Temperatur- und Druckschwankungen zunehmend undicht, was - insbesondere bei Unterputz-Montagen - zu hohen Bauschäden führen kann.

Aus US 5 484 174 A ist ein gattungsgemäßer Fitting bekannt. Die Leckstelle wird gebildet durch einen größeren Innendurchmesser des Fittings gegenüber dem Außendurchmesser des Rohrendes.

In der DE 102 17 824 C1 ist eine Rohrverbindung offenbart, bestehend aus einem Fitting, der mindestens mit einem Dichtelement versehen ist, und einem Leitungsrohr, dessen Endbereich nach dem Einschub in oder nach dem Aufschub auf den Fitting an einen Absatz des Fittings zur Anlage kommt. Das Leitungsrohr weist mindestens einen sich in Längsrichtung erstreckenden Bereich auf, der von der idealen Kreisform abweicht. Nach dem Einstecken oder Aufschieben des Leitungsrohres in den oder auf den Fitting ist mindestens eine Leckstelle zwischen dem Dichtelement und dem Fitting oder zwischen Dichtelement und Leitungsrohr vorhanden, die nach einem Verpressen gas- oder flüssigkeitsdicht verschlossen ist. Das Leitungsrohr dieser Pressverbindung ist jedoch in seiner Herstellung aufwendig. Darüber hinaus verursacht es einen erheblichen Lagerungs- und Vorhaltungsaufwand. Des Weiteren kann beim Einschieben bzw. Aufschieben des Leitungsrohrs in bzw. auf den Fitting das Dichtelement in seiner Funktionsposition verändert werden, insbesondere kann beim Drehen bzw. Rollen des Dichtelements, die Leckstelle in ihren Abmessungen vermindert werden, wodurch der gewünschte Effekt stark beeinträchtigt wird.

Aus der DE 197 22 935 C1 ist eine Pressverbindung bekannt, bei der ein Dichtelement mit einem in Umlaufrichtung liegenden Querschnitt versehen ist, der mit einem vom Ausgangsquerschnitt abweichenden Querschnitt in Form eines Vorsprunges ausgestattet ist. Dadurch wird im unverpressten Zustand eine Undichtigkeit herbeigeführt, die nach dem Verpressen beseitigt wird. Das Dichtelement dieser Pressverbindung ist jedoch in seiner Herstellung aufwendig und kostenintensiv. Darüber hinaus kann der gewünschte Effekt stark beeinträchtigt werden, wenn beim Einführen des Rohres in den Anschlussstutzen das Dichtelement derart gedreht bzw. gerollt wird, dass der Vorsprung des Dichtelements nicht mehr in der vorgesehenen Funktionsposition liegt.

Aus der DE 101 64 568 C1 ist eine Rohrverbindung bekannt, bestehend aus einem metallischen Pressfitting, der mindestens einen im Querschnitt wulstartig ausgebildeten, ein Dichtelement aufnehmenden Abschnitt aufweist und einem metallischen Leitungsrohr mit einem glatt ausgebildeten Endbereich. Das Dichtelement weist in allen Querschnittsebenen einen gleichen, vom idealen Kreisquerschnitt abweichenden Querschnitt auf. Das Dichtelement ist so bemessen und nimmt in Bezug auf die Ringwulst und das Leitungsrohr radial eine derartige Lage ein, dass ein einen Durchtritt des zu fördernden Mediums erlaubender Spalt sich bildet, der nach dem Verpressen abdichtend geschlossen wird. Das Dichtelement dieser Pressverbindung ist ebenfalls in seiner Herstellung sehr aufwendig und kostenintensiv. Auch ist eine Verminderung des gewünschten Effekts durch Drehen bzw. Rollen des Dichtelementes nicht ausgeschlossen.

In der DE 100 07 914 C1 ist ein Fitting zur Herstellung einer Pressverbindung mit einem eingesteckten Rohrende beschrieben, das einen Endabschnitt aufweist, an dem eine ringförmige Wulst angeordnet ist, in der ein Dichtungsring vorgesehen ist. An der Wulst ist eine Ausbeulung vorgesehen, durch die ein Abstand zwischen dem Dichtungsring und der Wand des Endabschnittes gebildet wird. Erst durch das Verpressen dieser undichten Stelle wird eine abgedichtete Verbindungsanordnung hergestellt. Die Herstellung der Ausbeulung erfolgt durch einen Stempel, der beispielsweise einen kugelförmigen Abschnitt aufweist. Hierdurch wird der Übergang von Ringnut zur Ausbeulung relativ scharfkantig, sodass je nach Toleranzpaarung ein erwünschtes Einfließen des Dichtelements in die Ausbeulung nicht gegeben ist und der Anwender darauf zu achten hat, in welcher Position das Presswerkzeug an dem Anschlussstutzen angesetzt wird.

Aus der DE 101 18 955 A1 ist eine Rohrverbindung, bestehend aus einem metallischen Pressfitting bekannt, der einen im Querschnitt wulstartig ausgebildeten Abschnitt aufweist, in dem ein Dichtelement angeordnet ist. Im montierten, aber nicht verpressten Zustand nimmt das Dichtelement auch unter Berücksichtigung der Fertigungstoleranzen für Dichtelement, Pressfitting und Leitungsrohr in Bezug auf Ringwulst und Leitungsrohr radial eine Lage ein, die derart bemessen ist, dass sich ein einen Durchtritt des zu fördernden Mediums erlaubender Spalt bildet, welcher nach dem Verpressen abdichtend geschlossen wird. Nachteilig bei dieser Pressverbindung ist, dass bei der Herstellung des Fittings, der Dichtelemente und der Rohre ein nur sehr kleines Toleranzfeld zur Verfügung steht, wodurch die Herstellung sehr aufwendig und kostenintensiv ist. Der Einsatz von Standardrohren ist weitgehend ausgeschlossen. Des weiteren kommt das Leitungsrohr mit relativ viel Spiel in dem Anschlussstutzen zu liegen, wodurch das Rohr im Zuge der weiteren Montage vor dem Verpressen leicht aus dem Anschlussstutzen rutschen kann. Hierdurch ist die Gefahr einer Fehlpressung gegeben.

Hier will die Erfindung Abhilfe schaffen. Der Erfindung liegt die Aufgabe zugrunde, einen Fitting zur Pressverbindung von Rohrabschnitten sowie eine Verbindungsanordnung zu schaffen, die eine Führung der Rohrabschnitte zur Montage bereit stellt, eine Leckage im montierten aber unverpressten Zustand gewährleistet und die darüber hinaus kostengünstig herstellbar ist. Gemäß der Erfindung wird diese Aufgabe durch die Merkmale des Anspruchs 1 gelöst.

Mit der Erfindung ist ein Fitting zur Pressverbindung von Rohrabschnitten geschaffen, das eine Führung des Rohrabschnitts zur Montage bereit stellt und eine Leckage in montiertem, unverpressten Zustand gewährleistet, und die darüber hinaus kostengünstig herstellbar ist.

Durch die erfindungsgemäße Lösung wird die Durchgängigkeit der Leckage auch im Bereich des Dichtungselements gewährleistet. Vorteilhaft ist der nicht kreisförmige Querschnitt im Wesentlichen oval oder mehreckig ausgebildet.

In Ausgestaltung der Erfindung weist der nicht kreisförmige Querschnitt eine symmetrisch über den Umfang angeordnete unrunde Form auf. Durch diese rotationsinvariante Ausgestaltung des Querschnitts wird der Rohrabschnitt beim Einführen in das Fitting zentriert geführt.

In Weiterbildung der Erfindung ist an den Enden des Fittings jeweils ein Kragen angeordnet. Hierdurch ist die Führung des Rohrabschnitts in dem Fitting optimiert. Darüber hinaus ist der Kraftschluss der Pressverbindung durch die hierdurch erzielte vergrößerte Pressfläche maximiert.

In Ausgestaltung der Erfindung weist die Innenkontur mindestens eine Durchmesserverengung auf, an welche mindestens ein Rohrabschnitt anschlagbar ist. Hierdurch wird ein Mindestabstand der beidseitig in das Fitting einzubringenden Rohrabschnitte gewährleistet, wodurch einer möglichen Abdichtung der Verbindung im ungepressten Zustand durch passgenaues Aneinanderlegen der zu verbindenden Rohrabschnitte entgegengewirkt ist. Vorteilhaft ist die Durchmesserverengung umlaufend ausgeführt; auch eine punktuelle Durchmesserverjüngung ist möglich.

In Weiterbildung der Erfindung ist außen in den Fitting eine Kerbe eingebracht, wodurch in der Innenkontur des Fittings die Durchmesserverjüngung gebildet ist. Hierdurch ist eine kostengünstige Herstellung der Durchmesserverjüngung ermöglicht.

Die Aufgabe wird weiterhin durch eine Verbindungsanordnung, nach Anspruch 10 gelöst.

Mit der Erfindung ist eine Verbindungsanordnung zur Pressverbindung von Rohrabschnitten geschaffen, die eine Führung des Rohrabschnitts zur Montage bereit stellt und eine Leckage im montierten, noch unverpressten Zustand gewährleistet, und die darüber hinaus eine kostengünstige Herstellung der Verbindung ermöglicht.

Die zwischen dem Rohrabschnitt und der Innenkontur des Fittings ausgebildeten Spalte weisen jeweils dabei vorzugsweise ein radiales Maß von 0,1 bis 2 mm auf.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im einzelnen beschrieben. Es zeigen:
- Fig. 1: den Querschnitt eines Fittings mit eingeschobenem Rohrab- schnitt;
- Fig. 2: den Querschnitt eines Fittings mit eingeschobenem Rohrabschnitt in anderer Ausgestaltung;
- Fig. 3: den Querschnitt eines Fittings mit eingeschobenem Rohrabschnitt in einer weiteren Ausgestaltung;
- Fig. 4: die Darstellung eines Schnittes durch ein Fitting entlang der Linie A-A in Figur 1;
- Fig. 5: die Darstellung eines Schnittes durch ein Fitting entlang der Linie B-B in Figur 3;
- Fig. 6: eine Darstellung des Fittings nach Figur 5 mit reduziertem Kragen- durchmesser;
- Fig. 7: eine Darstellung des Fittings nach Figur 5 mit reduziertem Innen- konturdurchmesser bei unveränderter Wulst;
- Fig. 8: eine Darstellung des Fittings nach Figur 7 mit erweitertem Krageninnendurchmesser und
- Fig. 9: eine Darstellung des Fittings nach Figur 5 mit konisch zulaufen- dem Kragen.

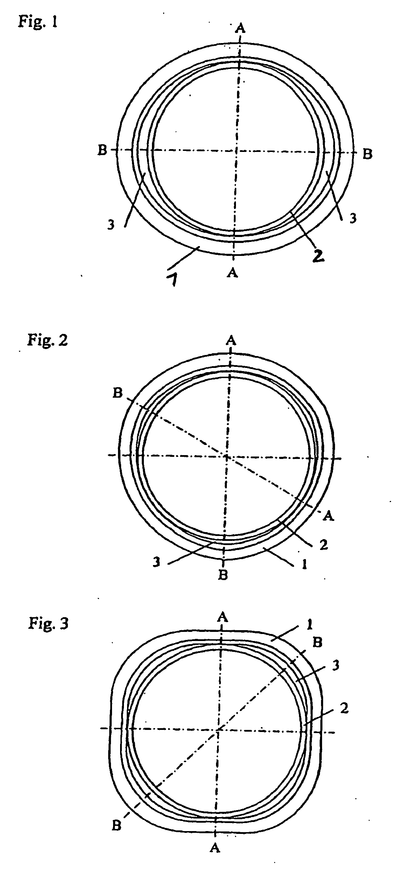

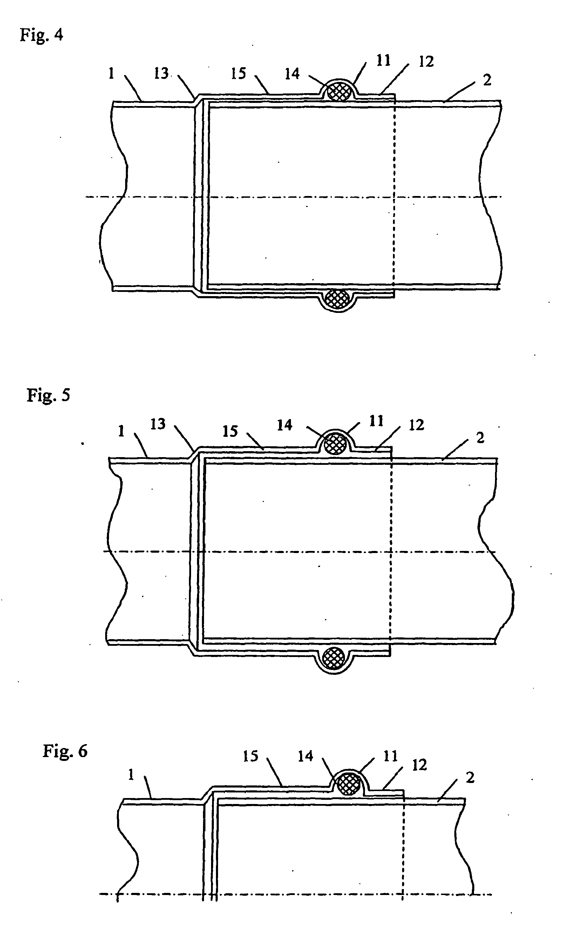

Die als Ausführungsbeispiel nach den Figuren 1 und 4 gewählte Verbindungsanordnung zur Pressverbindung von Rohrabschnitten besteht aus einem Fitting 1, in das beidseitig jeweils ein Rohrabschnitt 2 eingeschoben ist. Das Fitting 1 weist im Wesentlichen die Form eines Hohlzylinders auf. Es ist aus Kupfer hergestellt. Die Verwendung anderer Werkstoffe, beispielsweise Edelstahl, Kupfer, Rotguss oder dergleichen, ist ebenfalls möglich. Zu beiden Enden des Fittings 1 ist jeweils eine Wulst 11 eingebracht, welche jeweils in Richtung des freien Endes in einen Kragen 12 mündet. Die Wulst 11 verläuft radial um das Fitting 1 und weist einen im Wesentlichen halbkreisförmigen Hohlquerschnitt auf. Dabei ist die Wulst 11 gleichmäßig tief relativ zur Fittingwand ausgebildet. In der Wulst 11 ist ein Dichtelement 14 in Form eines O-Rings eingebracht. Zwischen den beiden Wulsten 11 ist in der Mitte des Fittings 1 außen umlaufend eine Kerbe 13 eingebracht, welche in der Innenkontur des Fittings 1 eine Durchmesserverjüngung bewirkt. Die Kerbe 13 unterteilt das Fitting 1 in zwei Anschlussstutzen 15 und dient als Anschlag für die beidseitig in das Fitting 1 eingeschobenen Rohrabschnitte 2.

Die Innenkontur des Fittings 1 ist im Ausführungsbeispiel nach Figur 1 oval ausgeführt, sodass zwischen den eingebrachten Rohrabschnitten 2 und der Innenkontur des Fittings 1 mit in der Wulst 11 angeordnetem Dichtelement 14 zwei diametral angeordnete Spalte 3 gebildet sind. Alternativ sind andere nicht kreisförmige Querschnitte der Innenkontur möglich (vgl. Figuren 2 und 3). Der Außendurchmesser der eingebrachten Rohrabschnitte 2 ist dabei kleiner als das kleinste Innenmaß des Fittings 1. Das Dichtelement 14 liegt unter Vorspannung in der Wulst 11 an und nimmt dabei dessen unrunde Form an, sodass die Spalte 3 sich auch über den Bereich zwischen Dichtelement 14 und Rohrabschnitt 2 erstrecken. Der unrunde Bereich des Fittings 1 bei unrunder Wulst 11 ist auch lediglich auf einer Seite der Wulst 11 oder beiderseits der Wulst 11 vorgesehen. Der unrunde Bereich kann dabei eine sehr geringe axiale Erstreckung oder aber eine weite axiale Erstreckung aufweisen. Vorteilhaft erstreckt sich die Unrundheit axial über den halben Pressbereich der zur Erstellung der Pressverbindung verwendeten Pressbacke. Die unrunden Bereiche verlaufen jeweils parallel zur Wulst 11, sodass der radiale Abstand der der Wulst 11 zu- und abgewandten Enden der unrunden Bereiche einen gleichbleibenden Abstand zur Wulst 11 aufweisen (sog. Äquidistanz).

Die durch die Unrundheit zwischen dem nicht kreisförmigen Bereich der Innenkontur des Fittings 1 und der kreisförmigen Außenkontur des Rohrabschnitts 2 erzielten axial sich erstreckenden Spalte bilden die Leckage, durch die bei nicht erfolgter Verpressung dieser Verbindungsstelle das Medium bei der Druckprobe austritt. Erst durch die Umfangsverringerung im Zuge der Verpressung mittels eines Presswerkzeuges wird der Querschnitt der Innenkontur des Fittings 1 an die Außenkontur der Rohrabschnitte 2 gepresst, wodurch die Spalte 3 geschlossen werden. Dabei werden die Dichtelemente 14 in ihrem gesamten Umfang unter einer hohen elastischen Verformung mit dem Anschlussstutzen 15 sowie dem Kragen 11 an die Rohrabschnitte 2 angepresst, wodurch eine dichte Verbindung erzielt wird. Auf Grund der Irreversibilität des Pressvorgangs ist die hergestellte Pressverbindung auch für hohe Drücke geeignet.

Über die symmetrisch unrunde Form der Innenkontur des Fittings 1 erhalten die Rohrabschnitte 2 beim Einführen in den Anschlussstutzen 15 des Fittings 1 eine zentrierte Führung, ohne dass die gebildeten Spalte 3 funktionsmäßig eingeschränkt werden. Weiterhin kann das Rohr 2 vor dem Verpressen nicht ungewollt aus dem Anschlussstutzen 15 des Fittings 1 herausrutschen.

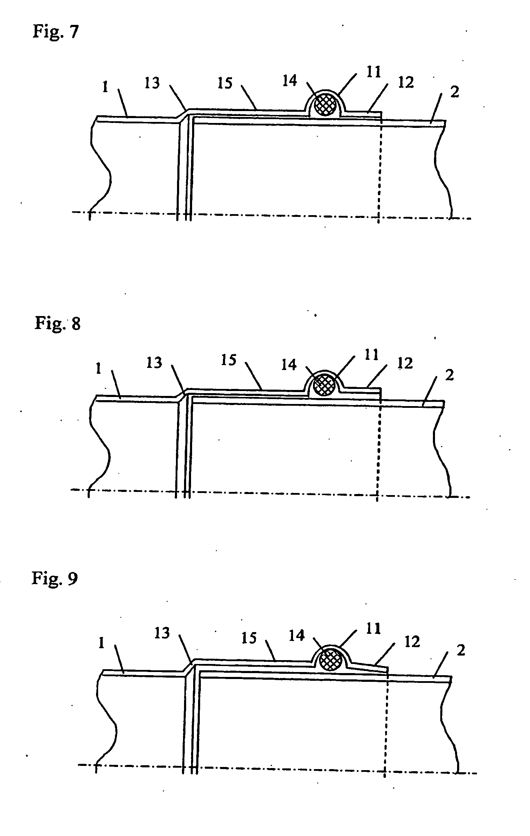

Im Ausführungsbeispiel gemäß Figur 6 ist der Innendurchmesser des Kragens 12 des Fittings 1 reduziert ausgeführt. Weitere Ausführungsformen sind in den Figuren 7 bis 9 dargestellt. Durch die unterschiedlichen Gestaltungen von Anschlussstutzen 15 und Kragen 12 ist eine optimale Anpassung des Fittings an das zu leitende Medium ermöglicht, wobei gleichzeitig eine maximale Führung der Rohrabschnitte 2 innerhalb des Fittings 1 erzielbar ist. Beispielsweise wird im Ausführungsbeispiel nach Figur 9 durch einen konisch zulaufenden Kragen 12 eine maximale Fixierung des Rohrabschnitts 2 innerhalb des Fittings 1 erzielt. Gleichzeitig ist das Rohr 2 innerhalb des Anschlussstutzens 15 durch den großzügig ausgebildeten Spalt 3 flexibel an die äußeren Bedingungen anpassbar. In einer anderen Ausgestaltung kann der Kragen 12 auch fehlen.

Die vorgeschlagene Anordnung ist eine einfache Lösung, um in montiertem Zustand gezielt eine Leckagestelle zu erzeugen, sodass bei Nichtverpressung dieser Rohrverbindungsstelle die Druckprobe negativ ausfällt und der Anwender diese nicht verpresste Verbindung nachverpressen und die Druckprobe wiederholen kann. Dadurch, dass Teilbereiche der Innenkontur des Fittings 1, insbesondere des in der Wulst 11 angeordneten Dichtelements 14 an dem eingeführten Rohrabschnitt 2 anliegen, wird verhindert, dass das Rohr 2 ungewollt vor dem Verpressen aus der Verbindungsanordnung herausrutscht. Weiterhin wird das Rohr 2 beim Einführen in das Fitting 1 geführt, sodass ein Verletzen oder Herausdrücken des Dichtelements 14 aus der Wulst 11 vermieden wird.

Die vorgeschlagene Verbindungsanordnung ist für alle gängigen Pressfittingtypen anwendbar. Dies bringt den Vorteil, dass die in großer Vielzahl im Markt befindlichen Presswerkzeuge unverändert einsetzbar sind.

Unter dem Begriff "Fitting" sind im Sinne der vorliegenden Erfindung alle Verbindungselemente zu verstehen, welche über eine Pressverbindung mit mindestens einem Rohrende verbindbar sind, insbesondere auch Armaturen. Ein Fitting kann ein verhältnismäßig komplizierter Gegenstand sein, dessen Anschlussbereich entsprechend auf einen Rohrabschnitt aufgeschoben wird.

Zur Herstellung des Fittings ist es vorteilhaft, zunächst den gewünschten unrunden axialen Rohreinschubbereich nahezu zylindrisch kreisrund zu formen, jedoch mit einem Durchmesser der ca. 1 % bis 10 % größer ist als der Durchmesser der bekannten Pressfittings und anschließend durch Umformen in die gewünschte unrunde Form zu bringen. Auch ist vorstellbar, dass die unrunde Form mittels Hinterdrehen polygonartig spanend angebracht wird.

## Patentansprüche

1. Fitting zur Pressverbindung von Rohrenden (2) mit einer im Wesentlichen zylindrischen Innenkontur mit mindestens einer radial nach außen ausgebildeten Wulst (11), in der ein Dichtelement (14) vorgesehen ist und mit einer Einrichtung zum Bilden mindestens zweier Leckstellen zwischen dem Dichtelement (14) und einem mit dem Fitting (1) zusammensteckbaren Rohrende (2) vor einem Verpressen, **dadurch gekennzeichnet, dass** die Innenkontur des Fittings (1) zumindest an einem Ende eine symmetrisch unrunde Form mit einem kleinsten Innenmaß besitzt, demgegenüber der Außendurchmesser des Rohrendes (2) kleiner ist, wobei der symmetrisch unrunde Bereich des Fittings (1) bei unrunder Wulst (11) auch lediglich auf einer Seite der Wulst (11) oder beidseits der Wulst (11) vorgesehen ist und über symmetrisch unrunde Form der Innenkontur des Fittings (1) eine zentrierte Führung für das Rohrende (2) gebildet ist.

2. Fitting nach Anspruch 1, **dadurch gekennzeichnet, dass** die symmetrisch unrunde Form im Wesentlichen oval oder mehreckig ausgebildet ist.

3. Fitting nach Anspruch 1 oder 2, **dadurch gekennzeichnet, dass** die symmetrisch unrunde Form über den Umfang angeordnet ist.

4. Fitting nach einem der Ansprüche 1 bis 3, **dadurch gekennzeichnet, dass** an den Enden des Fittings (1) jeweils ein Kragen (12) angeordnet ist.

5. Fitting nach einem der Ansprüche 1 bis 4, **dadurch gekennzeichnet, dass** die Innenkontur des Fittings (1) mindestens eine Durchmesserverjüngung (13) aufweist, an welche mindestens ein Rohrabschnitt (2) anschlagbar ist.

6. Fitting nach Anspruch 5, **dadurch gekennzeichnet, dass** außen in das Fitting (1) eine Kerbe eingebracht ist, wodurch in der Innenkontur des Fittings (1) die Durchmesserverjüngung (13) gebildet ist.

7. Fitting nach einem der Ansprüche 5 und 6, **dadurch gekennzeichnet, dass** die Durchmesserverjüngung (13) umlaufend ausgeführt ist.

8. Fitting nach einem der Ansprüche 5 und 6, **dadurch gekennzeichnet, dass** die Durchmesserverjüngung (13) punktuell ausgeführt ist.

9. Fitting nach einem der vorgenannten Ansprüche, **dadurch gekennzeichnet, dass** das Fitting (1) aus plastisch verformbaren Material, vorzugsweise Metall, hergestellt ist.

10. Verbindungsanordnung zur Pressverbindung von Rohrabschnitten (2), bestehend aus mindestens einem Rohrabschnitt (2) und einem Fitting (1) nach einem der Ansprüche 1 bis 10 sowie einem Dichtelement (14), welches zwischen diesen in einer Wulst (11) des Fittings (1) angeordnet ist, **dadurch gekennzeichnet, dass** im nicht verpressten Zustand zwischen dem Rohrabschnitt (2) und der Innenkontur des Fittings (1) mindestens zwei axiale Spalten (3) ausgebildet sind, die sich über den gesamten Verbindungsbereich erstrecken.

11. Verbindungsanordnung nach Anspruch 10, **dadurch gekennzeichnet, dass** die Spalten (3) jeweils ein radiales Maß von 0,1 bis 2 mm aufweisen.

## Claims

1. Fitting for connecting ends of pipe or tube (2) by compression, having a substantially cylindrical internal contour having at least one ridge (11) which is configured in a radially outward direction and in which a sealing element (14) is provided, and having a device for forming prior to a compressing operation at least two leakage points between the sealing element (14) and an end of the pipe or tube (2) that can be fitted together with the fitting (1), **characterised in that** the internal contour of the fitting (1) has at least at one end a symmetrically non-round shape with a smallest internal dimension, compared with which the external diameter of the end of the pipe or tube (2) is smaller, the symmetrically non-round region of the fitting (1) in the case of a non-round ridge (11) also being provided merely on one side of the ridge (11) or on both sides of the ridge (11) and centralised guidance for the end of the pipe or tube (2) being formed by the symmetrically non-round shape of the internal contour of the fitting (1).

2. Fitting according to Claim 1, **characterised in that** the symmetrically non-round shape is of substantially oval or polygonal shape.

3. Fitting according to Claim 1 or 2, **characterised in that** the symmetrically non-round shape is arranged around the circumference.

4. Fitting according to one of Claims 1 to 3, **characterised in that** a collar (12) is arranged at each of the ends of the fitting (1).

5. Fitting according to one of Claims 1 to 4, **characterised in that** the internal contour of the fitting (1) has at least one narrowing of diameter (13) against which at least one length of pipe or tube (2) can be brought into abutment.

6. Fitting according to Claim 5, **characterised in that** a notch is made in the outside of the fitting (1), thereby forming the narrowing of diameter (13) in the internal contour of the fitting (1).

7. Fitting according to either of Claims 5 and 6, **characterised in that** the narrowing of diameter (13) is produced all round.

8. Fitting according to either of Claims 5 and 6, **characterised in that** the narrowing of diameter (13) is produced at a point.

9. Fitting according to one of the foregoing claims, **characterised in that** the fitting (1) is made from plastically deformable material, preferably metal.

10. Connecting arrangement for connecting lengths of pipe or tube (2) by compression, comprising at least one length of pipe or tube (2) and a fitting (1) according to one of Claims 1 to 9 plus a sealing element (14) which is arranged between the latter in a ridge (11) in the fitting (1), **characterised in that** at least two axial gaps (3) which extend over the entire connecting region are formed between the length of pipe or tube (2) and the internal contour of the fitting (1) in the uncompressed state.

11. Connecting arrangement according to Claim 10, **characterised in that** the gaps (3) each have a radial dimension of 0.1 to 2 mm.

## Revendications

1. Raccord pour l'assemblage à ajustement serré d'extrémités de tube (2) avec un contour intérieur essentiellement cylindrique avec au moins un bourrelet (11) formé radialement vers l'extérieur, dans lequel il est prévu un élément d'étanchéité (14), et avec un dispositif pour former au moins deux zones de fuite entre l'élément d'étanchéité (14) et une extrémité de tube (2) pouvant être emmanchée dans le raccord (1) avant un pressage, **caractérisé en ce que** le contour intérieur du raccord (1) possède au moins à une extrémité une forme non ronde symétrique avec une très petite dimension intérieure, le diamètre extérieur de l'extrémité de tube (2) est en revanche plus petit, la région non ronde symétrique du raccord (1) étant prévue uniquement sur un côté du bourrelet (11) ou sur les deux côtés du bourrelet (11) lorsque le bourrelet (11) n'est pas rond et par le biais de la forme non ronde symétrique du contour intérieur du raccord (1) un guidage centré étant formé pour l'extrémité de tube (2).

2. Raccord selon la revendication 1, **caractérisé en ce que** la forme non ronde symétrique est essentiellement ovale ou polygonale.

3. Raccord selon la revendication 1 ou 2, **caractérisé en ce que** la forme non ronde symétrique est disposée sur la périphérie.

4. Raccord selon l'une quelconque des revendications 1 à 3, **caractérisé en ce qu'**un collet (12) est à chaque fois disposé aux extrémités du raccord (1).

5. Raccord selon l'une quelconque des revendications 1 à 4, **caractérisé en ce que** le contour intérieur du raccord (1) présente au moins une diminution de diamètre (13), sur laquelle au moins une section de tube (2) peut venir buter.

6. Raccord selon la revendication 5, **caractérisé en ce qu'**une entaille est pratiquée extérieurement dans le raccord (1), par laquelle une diminution de diamètre (13) est réalisée dans le contour intérieur du raccord (1).

7. Raccord selon l'une quelconque des revendications 5 et 6, **caractérisé en ce que** la diminution de diamètre (13) est réalisée sur la périphérie.

8. Raccord selon l'une quelconque des revendications 5 et 6, **caractérisé en ce que** la diminution de diamètre (13) est réalisée ponctuellement.

9. Raccord selon l'une quelconque des revendications précédentes, **caractérisé en ce que** le raccord (1) est fabriqué en un matériau plastiquement déformable, de préférence en métal.

10. Dispositif d'assemblage pour l'assemblage à ajustement serré de sections de tube (2), se composant d'au moins une section de tube (2) et d'un raccord (1) selon l'une quelconque des revendications 1 à 9 ainsi que d'un élément d'étanchéité (14), qui est disposé entre ceux-ci dans un bourrelet (11) du raccord (1), **caractérisé en ce que**, à l'état non pressé, il se trouve entre la section de tube (2) et le contour intérieur du raccord (1) au moins deux interstices axiaux (3), qui s'étendent sur toute la zone d'assemblage.

11. Dispositif d'assemblage selon la revendication 10, **caractérisé en ce que** chacun des interstices (3) présente une dimension radiale de 0,1 à 2 mm.
